# EUROPEAN PATENT SPECIFICATION

(11) **EP 4 046 260 B1**
(45) Date of publication and mention of the grant of the patent: **25.11.2026**
(21) Application number: 20804437.0
(22) Date of filing: 13.10.2020
(51) Int. Cl.: H02K 9/04, H02K 9/06, H02K 3/40

(54) **INTERNALLY PRESSURIZED ELECTRIC MOTOR**
ELEKTROMOTOR MIT INNENDRUCK
MOTEUR ÉLECTRIQUE À PRESSION INTERNE

(30) Priority: 15.10.2019 US 201962915314 P
(43) Date of publication of application: 24.08.2022
(73) Proprietor: Eaton Intelligent Power Limited, Dublin 4 (IE)
(72) Inventor: GOYKHMAN, Mikhail, Reseda, CA 91335 (US)
(74) Representative: Schwan Schorer & Partner mbB
(86) International application number: PCT/EP2020/025454
(87) International publication number: WO 2021/073772

(56) References cited:
- EP-A1- 1 612 916
- EP-A1- 2 860 855
- EP-A1- 3 406 525
- EP-A1- 3 421 734
- EP-A2- 2 708 702
- EP-B1- 3 421 734
- GB-A- 2 574 826
- GB-A- 583 798
- US-A- 4 074 156
- US-A- 6 037 683
- US-A1- 2003 102 728
- US-A1- 2010 181 861
- US-A1- 2010 187 025
- US-A1- 2012 194 014
- US-A1- 2013 334 911

## Description

### Background

More-electric aircraft and all-electric aircraft are increasingly becoming more relevant in the aerospace industry. To optimize the design of these new air vehicles, high voltage and high current electrical systems are being introduced into new models. Various voltages are now being proposed for future aircraft, e.g., from 230 V AC to 4000 V DC and above.

When using high voltages at aircraft level altitudes, partial discharges are more likely to occur unless precautions are taken. Known techniques for mitigating partial discharge between current carrying conductors include increasing the distance between the conductors and/or increasing the insulation around the conductors. These approaches are not practical when conductors need to be tightly wound inside a size optimized package. Documents EP 2 708 702 A2 US, 2010/187025 A1 and EP 3 406 525 A1 disclose devices of the prior art. .

### Summary

The present invention is directed to systems and methods of inhibiting corona discharge within an electric motor on an aircraft even while the aircraft is operating above sea level. In particular, the present invention is an electrical device for use on an electric aircraft as it is defined in claim 1 and a method of inhibit corona discharge within an electric motor on an aircraft operating above sea level as it is defined in claim 11. The electric motor includes conductor windings disposed within a non-hermetically sealed interior. The method includes using a fan to blow gas into a flow path extending through the electric motor and past conductor windings to increase internal pressure around the conductor windings.

The fan is operated by a shaft that rotates relative to the stator when the electric motor is operated.

The flow path includes at least one inlet and at least one outlet. In certain examples, the flow path includes multiple inlets. In certain examples, the flow path includes multiple outlets.

The flow path is restricted to increase a pressure difference between the interior of the electric motor and an exterior of the electric motor. The surface area defined by the inlets is larger than the surface defined by the outlets. In certain implementations, the flow path is restricted (e.g., the passageway is narrowed) within the interior between the inlet and outlet.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### Brief Description of the Drawings

The accompanying drawings, which are incorporated in and constitute a part of the description, illustrate several aspects of the present invention. A brief description of the drawings is as follows:
FIG. 1 is a schematic diagram of an example electric motor including a fan configured to flow gas into a first example flow path extending past a stator in accordance with principles of the present invention; and
FIG. 2 is a schematic diagram of another example electric motor including a fan configured to flow gas into a second example flow path extending past a stator in accordance with principles of the present invention.

### Detailed Description

Reference will now be made in detail to exemplary aspects of the present invention that are illustrated in the accompanying drawings. Wherever possible, the same reference numbers will be used throughout the drawings to refer to the same or like parts.

The present invention is directed to an electric device (e.g., an electric motor) for use on an electric aircraft (e.g., partially-electric aircraft or all-electrical aircraft) or other flying vehicle. Internal pressure is generated inside the electric deviceto mitigate the occurrence of corona discharges within the electric device. In particular,
pressure is artificially increased around conductors within the electric device. In certain examples, the increased pressure is generated at the electric device (e.g., by a fan).

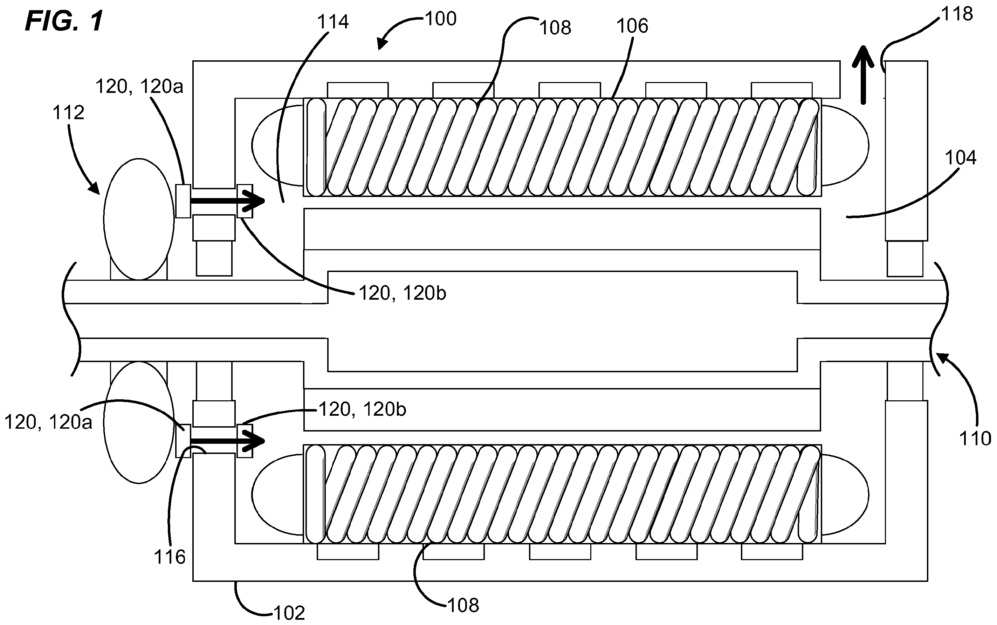

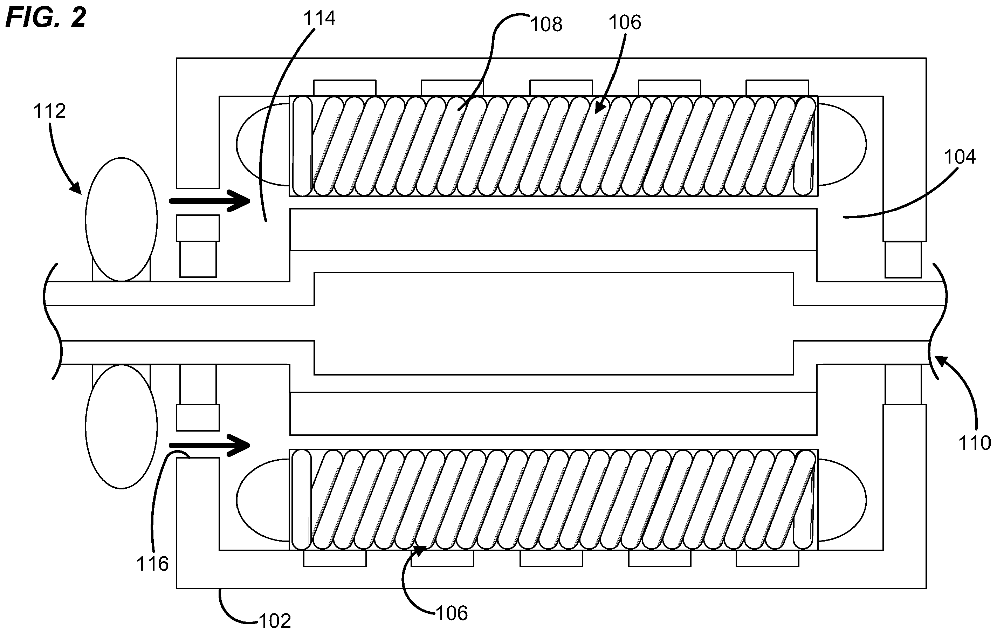

Referring to FIGS. 1 and 2, an electric motor 100 includes a housing 102 defining an interior 104. The interior 104 of the housing 102 is not hermetically sealed.

A stator 106 is disposed within the housing 102. The stator 106 includes conductor windings 108. Since the interior 104 is not hermetically sealed, the windings 108 are typically exposed to the external pressure of the gas (e.g., air) surrounding the electric motor 100.

A shaft 110 is disposed within the housing 102 to extend through the stator 106. The shaft 110 is rotatable relative to the stator 106. The shaft 110 is made to rotate using the electro-magnetic field generated by the stator 106, thereby converting electrical energy to mechanical energy. The mechanical energy can be distributed to other components within the aircraft through the rotating shaft 110.

In certain implementations, the electric motor 100 is a propulsion motor that rotates one or more propellers and/or fans to move the aircraft. In certain implementations, the electric motor 100 rotates one or more pumps (e.g., a hydraulic pump, a fuel pump, etc.) within the aircraft. In certain implementations, the electric motor 100 powers an environmental control system. Other applications are possible.

Operating the electric motor 100 using high voltages (e.g., 270 VDC, 330 VDC, 4000 VDC, 230 VAC, etc.) allows the electric motor 100 tobe provided in a smaller package compared to low voltage models (e.g., 28 VDC). However, higher voltage also tends to lead to increased occurrences of corona discharges. Operating the electric motor 100 at high altitudes also results in reduced atmospheric pressure around the conductor windings 108 within the stator 106. This reduced atmospheric pressure also tends to lead to increased occurrences of corona discharges.

To counter-act the reduced atmospheric pressure around the conductor windings 108, the electric motor 100 is configured to generate increased internal pressure around the stator 106. In certain implementations, the electric motor 100 includes a fan 112 to blow gas (e.g., air) into a flow path 114 within the interior 104 of the electric motor 100 to generate increased internal pressure about the conductor windings 108. The flow path 114 extends through the interior 104 from one or more inlets 116 at or near the fan 112. In general, the flow path 114 is restricted to increase a pressure difference of gas entering the interior 104 through the one or more inlets 116.

In some implementations, the fan 112 and flow path 114 cooperate to generate an internal pressure approaching atmospheric pressure at sea level. In certain examples, the fan 112 and flow path 114 cooperate to generate an internal pressure of at least 0.5 atmospheres. In certain examples, the fan 112 and flow path 114 cooperate to generate an internal pressure of at least 0.75 atmospheres. In certain examples, the fan 112 and flow path 114 cooperate to generate an internal pressure of at least 1 atmosphere. In certain implementations, the fan 112 and flow path 114 cooperate to generate an internal pressure exceeding atmospheric pressure at sea level. For example, in certain implementations, the fan 112 and flow path 114 cooperate to generate an internal pressure of at least 1.5 atmospheres. In certain examples, the fan 112 and flow path 114 cooperate to generate an internal pressure of at least 2 atmospheres. In certain examples, the fan 112 and flow path 114 cooperate to generate an internal pressure of at least 3 atmospheres. In certain examples, the fan 112 and flow path 114 cooperate to generate an internal pressure of at least 4 atmospheres. In certain implementations, the fan 112 and flow path 114 cooperate to generate an internal pressure of at least 5 atmospheres. In certain examples, the fan 112 and flow path 114 cooperate to generate an internal pressure of at 1 east 10 atmospheres.

By generating increased pressure within the electric motor 108, the thickness of the insulation around the conductor windings 108 can be reduced compared to non-pressurized windings at the same altitude. Accordingly, the spacing between adjacent coils of the conductor windings 108 can be reduced. In certain examples, the conductor windings 108 are spaced no more than 20 mm apart. In certain examples, the conductor windings 108 are spaced no more than 10 mm apart. In certain examples, the conductor windings 108 are spaced no more than 5 mm apart. In certain examples, the conductor windings 108 are spaced no more than 1 mm apart. In certain examples, the conductor windings 108 are spaced no more than 0.5 mm apart.

In some implementations, the flow path 114 extends between the one or more inlets 116 and one or more outlets 118 (e.g., see FIG. 1). In some such examples, a total open area defined by the outlets 118 is less than a total open area defined by the inlets 116. Accordingly, more gas enters the flow path 114 than exits the flow path 114,thereby increasing the pressure within the interior 104. In certain examples, the flow path 114 has more inlets 116 than outlets 118. In certain examples, at least one of the inlets 116 is larger than at least one of the outlets 118. In other such examples, portions of the flow path 114 within the interior 104 may be restricted to increase the pressure difference. In other implementations, the flow path 114 does not have an outlet 118 (e.g., see FIG. 2). Rather, the fan 112 pushes gas into the interior 104 along the flow path 114 until the pressure within the interior 104 is sufficiently high to counteract the pressure generated by the fan 112.

Using the fan 112 and restricted flow path 114 generates the internal pressure at the electric motor 100. Accordingly, pressurized gas does not need tobe separately stored, maintained, and distributed to the electric motor 100.

In some implementations, the fan 112 mounts to the shaft 110 and rotates with the shaft 110. Mounting the fan 112 to the shaft 110 reduces the number of additional parts necessary to operate the electric motor 100. Reducing the number of additional parts reduces the packaging size (or at least mitigates a needs to increase the packaging size) for the electric motor 100. In addition, attaching the fan 112 to the shaft 110 generates the increased internal pressure when the electric motor 100 is in operation. Accordingly, the increased internal pressure is generated when the wiring needs to be pressurized to protect against corona discharge. However, energy and resources are not wasted in generating such pressure while the electric motor 100 is not in use. In other implementations, however, the fan 112 can be mechanically supported separate from the electric motor 100. In certain examples, the fan 112 may be controlled separate from the electric motor 100.

In certain implementations, one or more filter arrangements 120 can be disposed at the one or more inlets 116 and/or at the one or more outlets 118. The filter arrangement 120 catches external contaminants carried by the gas blown by the fan 112. In some implementations, an example filter arrangement 120A is disposed external of the housing 102 (e.g., at or near the one or more inlets 116) to inhibit contaminants from initially entering the flow path 114. In other implementations, an example filter arrangement 120B is disposed within the interior 104 of the housing 102 (e.g., at or near the one or more inlets 116) to clean the gas passing through the flow path 114. In certain implementations, the filter arrangements 120, 120A, 120B can be disposed internal or external of the housing 102 at or near the outlets 118.

Having described the preferred aspects and implementations of the present invention, modifications and equivalents of the disclosed concepts may readily occur to one skilled in the art. However, it is intended that such modifications and equivalents be included within the scope of the claims which are appended hereto.

## Claims

1. An electrical device (100) for use on an electric aircraft, the electrical device comprising:
a housing (102) defining an interior (104), the housing not being hermetically sealed;
electrical components disposed within the interior of the housing (102);
a flow path (114) extending through the interior (104) of the housing (102) from an inlet (116) into the housing to an outlet (118), the flow path extending past the electrical components, the flow path being configured to increase a pressure difference of gas entering the interior through the at least one inlet; and
a fan (112) configured to blow the gas into the flow path (114) to generate increased internal pressure about the electrical circuitry;
wherein the surface area of the outlet (118) is smaller than the surface area of the inlet (116);
wherein the surface area of the outlet (118) of the housing (102) is configured to restrict gas blown through the housing by the fan (112) to increase the internal pressure to a pressure level which reduces corona discharges from the electrical components;
wherein the electrical device (100) is an electric motor; wherein the electrical motor includes a stator (106) disposed within the interior (104) and a shaft (110) extending through the stator and being rotatable relative to the stator; wherein the electrical components include conductor windings (108) of the stator,
wherein the fan (112) is mounted to the shaft (110), wherein operation of the fan is tied to operation of the shaft so that the increased internal pressure is generated about the conductor windings (108) when the shaft is rotating relative to the stator (106); and
wherein the electric device (100) is a propulsion motor that rotates a propeller of the electric aircraft.

2. The electrical device (100) of claim 1, wherein the inlet (116) is one of a plurality of inlets.

3. The electrical device (100) of any of claims 1-2, wherein the outlet (118) is one of a plurality of outlets, wherein a total cross-sectional area defined by the plurality of outlets is less than a total cross-sectional area defined by all of the one or more inlets.

4. The electrical device (100) of any of claims 1-2, wherein the flow path (114) is restricted within the housing (102) between the inlet (116) and the outlet (118).

5. The electrical device (100) of any of claim 1-4, further comprising a filter (120; 120A; 120B) disposed at the inlet of the housing to inhibit introduction of contaminants into the flow path (114).

6. The electrical device (100) of claim 5, wherein the filter is disposed upstream of the fan (112).

7. The electrical device (100) of claim 5, wherein the filter (120; 120A; 120B) is disposed downstream of the fan (112).

8. The electrical device (100) of claim 5 or 6, further comprising a filter disposed at the outlet.

9. The electrical device (100) of any of claims 1 to 4, 7 or 8, wherein the fan (112) is disposed within the housing (102) downstream of the inlet (116).

10. The electrical device (100) of any of claims 1 to 4, 7 or 8, wherein the fan (112) is disposed upstream of the inlet (116).

11. A method of inhibit corona discharge within an electric motor (100) on an aircraft operating above sea level, the electric motor including a motor housing (102) defining a non-hermetically sealed interior (104), the electric motor including conductor windings (108) within the non-hermetically sealed interior, the method comprising:
operating the aircraft above sea level;
using a fan (112) to blow gas into a flow path (114) extending through the non-hermetically sealed interior (104) of the electric motor (100) and past conductor windings (108) to increase internal pressure around the conductor windings to maintain a pressure of at least 0.5 atmospheres around the conductor windings during flight to reduce a likelihood of corona discharges within the non-hermetically sealed interior, and
wherein the pressure is maintained at or above 0.5 atmospheres around the conductor windings (108) by blowing the gas along the flow path (114) from an inlet (116) to an outlet (118) of the motor housing (102), wherein a surface area of the outlet is sufficiently smaller than a surface area of the inlet to cause restriction of the gas flow exiting the non-hermetically sealed interior to level at which the pressure within the non-hermetically sealed interior is maintained at or above 0.5 atmospheres.

## Patentansprüche

1. Elektrische Vorrichtung (100) zur Verwendung an einem Elektroluftfahrzeug, wobei die elektrische Vorrichtung umfasst:
ein Gehäuse (102), das einen Innenraum (104) definiert, wobei das Gehäuse nicht hermetisch abgedichtet ist;
elektrische Komponenten, die innerhalb des Innenraums des Gehäuses (102) angeordnet sind;
einen Strömungspfad (114), der sich durch den Innenraum (104) des Gehäuses (102) von einem Einlass (116) in das Gehäuse zu einem Auslass (118) erstreckt, wobei sich der Strömungspfad an den elektrischen Komponenten vorbei erstreckt, wobei der Strömungspfad dazu ausgebildet ist, einen Druckunterschied von durch den mindestens einen Einlass in den Innenraum eintretendem Gas zu erhöhen; und
einen Lüfter (112), der dazu ausgebildet ist, das Gas in den Strömungspfad (114) zu blasen, um einen erhöhten Innendruck um die elektrische Schalturig herum zu erzeugen;
wobei die Fläche des Auslasses (118) kleiner ist als die Fläche des Einlasses (116);
wobei die Fläche des Auslasses (118) des Gehäuses (102) dazu ausgebildet ist, durch den Lüfter (112) durch das Gehäuse geblasenes Gas zu drosseln, um den Innendruck auf ein Druckniveau zu erhöhen, das Koronaentladungen von den elektrischen Komponenten verringert;
wobei die elektrische Vorrichtung (100) ein Elektromotor ist; wobei der Elektromotor einen Stator (106), der innerhalb des Innenraums (104) angeordnet ist, und eine Welle (110) umfasst, die sich durch den Stator erstreckt und relativ zu dem Stator drehbar ist; wobei die elektrischen Komponenten Leiterwicklungen (108) des Stators umfassen,
wobei der Lüfter (112) an der Welle (110) angebracht ist, wobei der Betrieb des Lüfters an den Betrieb der Welle gekoppelt ist, sodass der erhöhte Innendruck um die Leiterwicklungen (108) herum erzeugt wird, wenn sich die Welle relativ zu dem Stator (106) dreht; und
wobei die elektrische Vorrichtung (100) ein Antriebsmotor ist, der einen Propeller des Elektroluftfahrzeugs dreht.

2. Elektrische Vorrichtung (100) nach Anspruch 1, wobei der Einlass (116) einer von mehreren Einlässen ist.

3. Elektrische Vorrichtung (100) nach einem der Ansprüche 1 bis 2, wobei der Auslass (118) einer von mehreren Auslässen ist, wobei eine von den mehreren Auslässen definierte Gesamtquerschnittsfläche kleiner ist als eine von sämtlichen des einen oder der mehreren Einlässe definierte Gesamtquerschnittsfläche.

4. Elektrische Vorrichtung (100) nach einem der Ansprüche 1 bis 2, wobei der Strömungspfad (114) innerhalb des Gehäuses (102) zwischen dem Einlass (116) und dem Auslass (118) gedrosselt ist.

5. Elektrische Vorrichtung (100) nach einem der Ansprüche 1 bis 4, ferner umfassend einen Filter (120; 120A; 120B), der an dem Einlass des Gehäuses angeordnet ist, um das Eindringen von Verunreinigungen in den Strömungspfad (114) zu verhindern.

6. Elektrische Vorrichtung (100) nach Anspruch 5, wobei der Filter stromaufwärts des Lüfters (112) angeordnet ist.

7. Elektrische Vorrichtung (100) nach Anspruch 5, wobei der Filter (120; 120A; 120B) stromabwärts des Lüfters (112) angeordnet ist.

8. Elektrische Vorrichtung (100) nach Anspruch 5 oder 6, ferner umfassend einen Filter, der an dem Auslass angeordnet ist.

9. Elektrische Vorrichtung (100) nach einem der Ansprüche 1 bis 4, 7 oder 8, wobei der Lüfter (112) innerhalb des Gehäuses (102) stromabwärts des Einlasses (116) angeordnet ist.

10. Elektrische Vorrichtung (100) nach einem der Ansprüche 1 bis 4, 7 oder 8, wobei der Lüfter (112) stromaufwärts des Einlasses (116) angeordnet ist.

11. Verfahren zum Verhindern von Koronaentladungen innerhalb eines Elektromotors (100) an einem Luftfahrzeug, das oberhalb der Meereshöhe betrieben wird, wobei der Elektromotor ein Motorgehäuse (102) umfasst, das einen nicht hermetisch abgedichteten Innenraum (104) definiert, wobei der Elektromotor Leiterwicklungen (108) innerhalb des nicht hermetisch abgedichteten Innenraums umfasst, wobei das Verfahren umfasst:
Betreiben des Luftfahrzeugs oberhalb der Meereshöhe;
Verwenden eines Lüfters (112), um Gas in einen Strömungspfad (114) zu blasen, der sich durch den nicht hermetisch abgedichteten Innenraum (104) des Elektromotors (100) und an den Leiterwicklungen (1013) vorbei erstreckt, um den Innendruck um die Leiterwicklungen herum zu erhöhen, um während des Flugs einen Druck von mindestens 0,5 Atmosphären um die Leiterwicklungen herum zu halten, um die Wahrscheinlichkeit von Koronaentladungen innerhalb des nicht hermetisch abgedichteten Innenraums zu verringern, und
wobei der Druck um die Leiterwicklungen (108) herum bei oder oberhalb von 0,5 Atmosphären aufrechterhalten wird, indem das Gas entlang des Strömungspfads (114) von einem Einlass (116) zu einem Auslass (118) des Motorgehäuses (102) geblasen wird, wobei eine Fläche des Auslasses ausreichend kleiner ist als eine Fläche des Einlasses, um eine Drosselung des aus dem nicht hermetisch abgedichteten Innenraum austretenden Gasstroms auf ein Niveau zu bewirken, bei dem der Druck innerhalb des nicht hermetisch abgedichteten Innenraums bei oder oberhalb von 0,5 Atmosphären gehalten wird.

## Revendications

1. Dispositif électrique (100) destiné à être utilisé sur un aéronef électrique, le dispositif électrique comprenant :
un logement (102) definissant un intérieur (104), le logement n'étant pas scellé hermétiquement ;
des composants électriques disposés au-dedans de l'intérieur du logement (102) ;
un chemin d'écoulement (114) s'étendant à travers l'intérieur (104) du logement (102) depuis une entrée (116), dans le logement, jusqu'à une sortie (118), le chemin d'écoulement s'étendant au-delà des composants électriques, le chemin d'écoulement étant configuré pour augmenter une différence de pression de gaz entrant dans l'intérieur à travers l'au moins une entrée ; et
un ventilateur (112) configuré pour souffler le gaz dans le chemin d'écoulement (114) pour générer une pression interne augmentée autour de la circuiterie électrique ;
dans lequel la superficie de surface de la sortie (118) est plus petite que la superficie de de surface de l'entrée (116) ;
dans lequel la superficie de surface de la sortie (118) du logement (102) est configurée pour limiter le gaz soufflé à travers le logement par le ventilateur (112) pour augmenter la pression interne jusqu'à un niveau de pression qui réduit des décharges par effet couronne provenant des composants électriques ;
dans lequel le dispositif électrique (100) est un moteur électrique ; dans lequel le moteur électrique inclut un stator (106) disposé au-dedans de l'intérieur (104) et un arbre (110) s'étendant à travers le stator et étant rotatif relativement au stator ; dans lequel les composants électriques incluent des enroulements conducteurs (108) du stator,
dans lequel le ventilateur (112) est monté sur l'arbre (110), dans lequel le fonctionnement du ventilateur est lié au fonctionnement de l'arbre de telle sorte que la pression interne augmentée est générée autour des enroulements conducteurs (108) lorsque l'arbre est en rotation relativement au stator (106) ; et
dans lequel le dispositif électrique (100) est un moteur de propulsion qui met en rotation une hélice de l'aéronef électrique.

2. Dispositif électrique (100) de la revendication 1, dans lequel l'entrée (116) est une d'une pluralité d'entrées.

3. Dispositif électrique (100) de quelconques des revendications 1 et 2, dans lequel la sortie (118) est une d'une pluralité de sorties, dans lequel une superficie de section transversale totale définie par la pluralité de sorties est inférieure à une superficie de section transversale totale définie par toutes de l'une ou des plusieurs entrées.

4. Dispositif électrique (100) de quelconques des revendications 1 et 2, dans lequel le chemin d'écoulement (114) est limité au-dedans du logement (102) entre l'entrée (116) et la sortie (118).

5. Dispositif électrique (100) de quelconques des revendications 1 à 4, comprenant en outre un filtre (120 ; 120A ; 120B) disposé au niveau de l'entrée du logement pour empêcher l'introduction de contaminants dans le chemin d'écoulement (114).

6. Dispositif électrique (100) de la revendication 5, dans lequel le filtre est disposé en amont du ventilateur (112).

7. Dispositif électrique (100) de la revendication 5, dans lequel le filtre (120 ; 120A ; 120B) est disposé en aval du ventilateur (112).

8. Dispositif électrique (100) de la revendication 5 ou 6, comprenant en outre un filtre disposé au niveau de la sortie.

9. Dispositif électrique (100) de quelconques des revendications 1 à 4, 7 ou 8, dans lequel le ventilateur (112) est disposé au-dedans du logement (102) en aval de l'entrée (116).

10. Dispositif électrique (100) de quelconques des revendications 1 à 4, 7 ou 8, dans lequel le ventilateur (112) est disposé en amont de l'entrée (116).

11. Procédé pour empêcher une décharge par effet couronne au-dedans d'un moteur électrique (100) sur un aéronef fonctionnant au-dessus du niveau de la mer, le moteur électrique incluant un logement de moteur (102) définissant un intérieur non hermétiquement scellé (104), le moteur électrique incluant des enroulements conducteurs (108) au-dedans de l'intérieur non hermétiquement scellé, le procédé comprenant :
la mise en fonctionnement de l'aéronef au-dessus du niveau de la mer ;
l'utilisation d'un ventilateur (112) pour souffler un gaz dans un chemin d'écoulement (114) s'étendant à travers l'intérieur non hermétiquement scellé (104) du moteur électrique (100) et à côté d'enroulements conducteurs (108) pour augmenter une pression interne autour des enroulements conducteurs pour maintenir une pression d'au moins 0,5 atmosphère autour des enroulements conducteurs durant le vol pour réduire une probabilité de décharges par effet couronne au-dedans de l'intérieur non hermétiquement scellé, et
dans lequel la pression est maintenue à 0,5 atmosphère, ou plus, autour des enroulements conducteurs (108) en soufflant le gaz le long du chemin d'écoulement (114) depuis une entrée (116) jusqu'à une sortie (118) du logement de moteur (102), dans lequel une superficie de surface de la sortie est suffisamment plus petite qu'une superficie de surface de l'entrée pour causer une restriction de l'écoulement de gaz sortant de l'intérieur non hermétiquement scellé à un niveau auquel la pression au-dedans de l'intérieur non hermétiquement scellé est maintenue à 0,5 atmosphère ou plus.
